Europäisches Patentamt

(19) **European Patent Office**

**Office européen des brevets**

(11) Publication number: **0 065 024**
**A1**

(12) # EUROPEAN PATENT APPLICATION

(21) Application number: **81103801.7**

(51) Int. Cl.³: **B 65 G 53/48,** B 65 G 53/08

(22) Date of filing: **18.05.81**

(43) Date of publication of application: **24.11.82**
**Bulletin 82/47**

(71) Applicant: **Libra, S.A., I-47031 Galazzano (SM)**

(72) Inventor: **Brandi, Alfredo, Via Consolare, I-47031-Dogana (SM)**

(84) Designated Contracting States: **AT BE CH DE FR GB LI LU NL SE**

(74) Representative: **Vatti, Paolo, Dr. Ing. et al, Fumero - Studio Consulenza Brevetti Widenmayerstrasse 4/I, D-8000 München 22 (DE)**

(54) **Screw device for introducing powdery products into launching pipes.**

(57) A screw device for introducing powdery products into launching pipes, comprises a horizontal screw (1) wherein the screw shaft (8) is mounted, in a cantilevered condition, on a pair of supports (9, 10) arranged at the end of the device close to the opening (3) into which the material is fed, and an ejector (5) connected at the free end of the screw (1), at the opposite end of the device, and positioned perpendicularly to the screw axis, on the same axis of the launching pipe into which the powdery material has to be introduced.

## "SCREW DEVICE FOR INTRODUCING POWDERY PRODUCTS INTO LAUNCHING PIPES"

=o☀o=o☀o=o☀o=

The present invention relates to an improved device comprising the combination of a variable pitch screw with an ejector, for introducing powdery products, particularly cement, into launching pipes.

The object of the invention is to realize a device for introducing powdery products into launching pipes, apt to guarantee a perfect air-product mixing, a constant carrying capacity and a perfect seal between the hopper feeding the product and the pipe into which said product must be introduced.

This object is efficiently obtained through a device characterized in that it comprises a horizontal screw, wherein the screw shaft is mounted, in a cantilevered condition, on a pair of supports arranged at the end of the device being close to the opening into which the material is fed, and an ejector being connected at the free end of the screw, at the opposite end of the device, and being positioned perpendicularly to the screw axis, on the same axis of the launching pipe into which the powdery material has to be introduced.

The heretofore specified screw device has a variable pitch screw, while the ejector is a compressed air ejector using a Venturi nozzle.

The invention will now be described in further detail, by mere way of example, with reference to an embodiment thereof, illustrated in the accompanying drawing, in which:

Fig. 1 is a section view of the device, along the screw axis and according to a vertical plane; and

Fig. 2 is a top plan view, showing some elements in section of the end part of the device of figure 1 comprising the ejector.

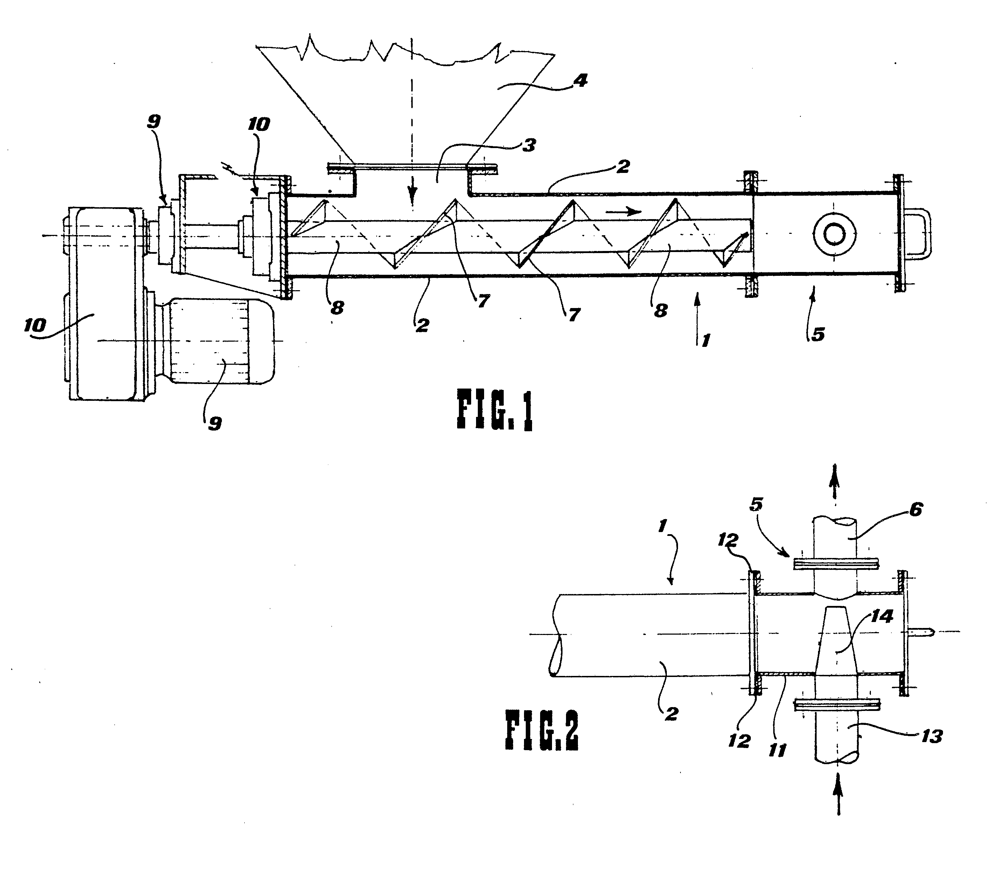

The device illustrated consists of a horizontal screw 1, the casing 2 of which is provided with an opening 3 close to one of its ends, the powdery material contained in a hopper 4 being fed through said opening 3 into the screw 1 itself, and of an ejector 5, mounted at the other end of the screw 1 and connected to a launching pipe 6, into which the powdery product has to be introduced.

As clearly shown in the drawing, the screw member 7 of the screw 1 is mounted, in a cantilevered condition, with its shaft 8 supported by two adjacent supports 9 and 10, placed at the end of the screw 1 close to the feed opening 3, at which end the shaft 3 is driven into rotation by a motor 9 through a reduction gear 10.

According to the invention, the screw 1 of the device has its screw member 7 with variable pitch, said pitch decreasing from the end where the powdery material is fed from the hopper 4, to the end where said material is let out into the ejector 5.

Always according to the invention, the ejector 5 comprises an outer casing 11, forming the extension of the casing 2 of the screw 1, to which it is fixed by means of suitably bolted flanges 12, and a tube 13 for feeding compressed air, arranged perpendicularly to the axis of the shaft 3 of the screw 1 and penetrating into the casing 11 with its end 14 shaped into a Venturi nozzle. To the casing 11 of the nozzle, is also fixed the launching pipe 6 into which has to be introduced the powdery material being fed from the screw 1. This pipe 6 is on the same axis of the compressed air feeding tube 13 and it opens into the casing 11 just in front of the nozzle 14.

In use, the material being fed from the hopper 4 into the screw 1, is tamped by its screw member 7 and sent to the ejector 5 which provides, thanks to the compressed air jet being sent into the pipe 6, to introduce it into said pipe 6 wherein the material itself gets sucked.

The adopted arrangement guarantees a perfect air-product mixing,

0065024

a constant carrying capacity and a perfect seal between the hopper and the pipe, as is required to guarantee the actual conveyance. The screw pitch variation allows to tamp the product in such a way as to eliminate the interspaces between the grains forming the product, thereby avoiding air escapes.

The supports for the shaft 3 of the screw 1, arranged outwardly and forming a bearing which allows the shaft itself to be supported in a cantilevered condition, guarantee the proper working of the system, in that they leave completely free the inside of the screw 1 (wherein any obstacle, as the presence of an inner support, would cause the interruption of the product tamping and, thereby, the inefficient compressed air tightness).

The ejector has a cylindrical tube section, wherein the tamped material settles, acting as a plug (which plug can neither be broken by compressed air, nor by the screw shaft), and guaranteeing the tightness even if the product should fail to be fed.

In the ejector, downstream of the compressed air inlet flange, the Venturi nozzle allows to accelerate the air in such a way as to create the depression required to agitate the product, so as to bring it at the speed of transport, which speed will depend on the type of product being transported and on the type of piping.

It is understood that there may be other practical embodiments of the device, differing from the one heretofore illustrated by way of example, without thereby departing from the scope of the present invention.

0065024

## CLAIMS

1) Screw device for introducing powdery products into launching pipes, characterized in that it comprises a horizontal screw, wherein the screw shaft is mounted, in a cantilevered condition, on a pair of supports arranged at the end of the device being close to the opening into which the material is fed, and an ejector being connected at the free end of the screw, at the opposite end of the device, and being positioned perpendicularly to the screw axis, on the same axis of the launching pipe into which the powdery material has to be introduced.

2) A screw device as in claim 1), wherein the screw has a variable pitch screw member.

3) A screw device as in claims 1) and 2), wherein the ejector is a compressed air ejector using a Venturi nozzle.

0065024

FIG.1

FIG.2

# EUROPEAN SEARCH REPORT

**European Patent Office**

Application number

EP 81 10 3801.7

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - C - 626 285 (MÖLLER) <br> * page 2, lines 3 to 116; fig. * <br> --- | 1 | B 65 G 53/48 <br> B 65 G 53/08 |
| | GB - A - 736 949 (STAMICARBON N.V.) <br> * fig. 2 * <br> --- | 1 | |
| | US - A - 3 712 681 (MARINO et al.) <br> * fig. 2 * <br> --- | 1 | |
| | DE - A1 - 2 751 773 (FULLER CO.) <br> * page 18, lines 24 to 31 * <br> --- | 2 | TECHNICAL FIELDS SEARCHED (int. Cl.³) |
| | DE - U - 1 883 385 (DOLOMITWERKE GMBH) <br> * claim 1 * <br> --- | 3 | B 65 G 33/00 <br> B 65 G 53/00 |
| A | DE - A1 - 2 930 236 (EISENBAU WYHLEN GMBH) <br> --- | | |
| A | DE - A1 - 2 547 559 (WIBA WINDELBAND KG) <br> --- | | |
| A | GB - A - 1 379 322 (BRITISH CELLOPHANE LTD.) <br> ---- | | CATEGORY OF CITED DOCUMENTS |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| Berlin | 05-01-1982 | SIMON |

EPO Form 1503.1 06.78